# EUROPEAN PATENT APPLICATION

(11) **EP 4 312 389 A1**
(43) Date of publication of application: **31.01.2024**
(21) Application number: 23184624.7
(22) Date of filing: 25.02.2019
(51) Int. Cl.: H04B 10/27, G02B 6/38, G02B 6/44

(54) **OPTICAL NETWORK DEVICE**

(62) Divisional of application: 19916944.2
(71) Applicant: Huawei Technologies Co., Ltd., Shenzhen, Guangdong 518129 (CN)
(72) Inventor: QI, Biao, Shenzhen, 518129 (CN); PEI, Guohua, Shenzhen, 518129 (CN); LI, Xiupeng, Shenzhen, 518129 (CN)
(74) Representative: Isarpatent

(57) **Abstract**

The present invention provides an optical network device. The optical network device includes an enclosure, where the enclosure is provided with at least one port. The optical network device further includes at least one adapter mounted on the port, where the adapter is configured to connect to an optical fiber connector. An optical cable is connected to the optical fiber connector. An outer sidewall of the optical fiber connector or an outer sidewall of the optical cable is provided with a first identification area, and the first identification area is used to identify the optical fiber connector or the optical cable. All of the ports are mutually arranged in a staggered manner, the adapters mounted on all of the ports are mutually arranged in a staggered manner, and the optical fiber connectors mounted on all of the adapters are mutually arranged in a staggered manner, so that at least a first photographing direction is present, and the first identification area on the optical fiber connector or the first identification area on the optical cable can be photographed in the first photographing direction. The optical network device can help an engineering person to take a photograph to obtain an on-site image, so that a correspondence between each port identifier and an identification number of a corresponding optical fiber connector can be automatically obtained based on the on-site image. In this case, the on-site engineering person does not need to manually record a correspondence between each optical cable port and an optical cable during construction, but only needs to directly take a photograph along the first photographing direction. In this way, labor costs are low, and construction efficiency and accuracy are high.

## Description

### TECHNICAL FIELD

This application relates to the field of optional communications technologies, and in particular, to an optical network device.

### BACKGROUND

An optical distribution network (Optical distribution network, ODN) provides a physical channel for optical transmission between an optical line terminal (Optical line terminal, OLT) and an optical network terminal (Optical network terminal, ONT).

In the ODN, optical splitting usually needs to be performed on an optical fiber in an optical cable to cover more users. For example, an optical signal from the OLT passes through in order an optical distribution frame (Optional Distribution Frame, ODF), a splitting and splicing closure (splitting and splicing closure, SSC), an optical splitting device, and an access terminal box (access terminal box, ATB), and then reaches the ONT.

A fiber access terminal FAT is used as an example. When each user subscribes to a data service (for example, a broadband service or a Wi-Fi service that needs to be subscribed to for home use), the user needs a drop cable. One end of the drop cable is inserted into an optical cable port of the FAT, and the other end is connected to a device in the user's house. A plurality of optical cable ports are usually disposed on each FAT, and each FAT is connected to a plurality of optical cables. The ODN is a passive network, and each node device does not have a management or maintenance function. Therefore a correspondence between each optical cable port and a corresponding optical cable can be recorded only by an engineering person, resulting in a comparatively high error rate. In addition, operators need to invest manpower every year to reorganize ODN resources, and an engineering person needs to manually record a connection relationship between a port on each device and an optical cable connected to the port, or the like on-site. Consequently, labor costs are comparatively high, and man-made problems such as a misoperation and omission are also inevitable.

### SUMMARY

This application provides an optical network device, so as to improve construction efficiency and accuracy and reduce labor costs.

A first aspect of this application provides an optical network device that is to be applied to the ODN or PON field. For example, the optical network device in this application may be, but not limited to, a fiber access terminal (fiber access terminal, FAT), a splitting and splicing closure, an optical access terminal box, an optical network terminal, an optical distribution frame, or the like. The optical network device includes an enclosure. The enclosure is provided with at least one port. The optical network device further includes at least one adapter mounted on the port. The adapter is configured to connect to an optical fiber connector. An optical cable is connected to the optical fiber connector. An outer sidewall of the optical fiber connector or an outer sidewall of the optical cable is provided with a first identification area, and the first identification area is used to identify the optical fiber connector or the optical cable. All of the ports are mutually arranged in a staggered manner, the adapters mounted on all of the ports are mutually arranged in a staggered manner, and the optical fiber connectors mounted on all of the adapters are mutually arranged in a staggered manner, so that at least a first photographing direction is present, and the first identification area on the optical fiber connector or the first identification area on the optical cable can be photographed in the first photographing direction. For example, all of the ports are arranged in a single row, a double row, a W-shape, a V-shape, or an S-shape. For example, the first identification area is an annular area surrounding the optical cable. The first identification area indicates an identification number of the optical cable, and each identification number uniquely identifies the optical fiber connector or the optical cable. For example, the first identification area includes at least one of a barcode, a two-dimensional code, a color identifier, a pattern identifier, and a structure identifier. The optical network device can help an engineering person to take a photograph to obtain an on-site image, so that a correspondence between each port identifier and an identification number of a corresponding optical fiber connector can be automatically obtained based on the on-site image. In this case, the on-site engineering person does not need to manually record a correspondence between each optical cable port and a corresponding optical cable during construction, but only needs to directly take a photograph along the first photographing direction. In this way, labor costs are low, and construction efficiency and accuracy are high.

In some possible designs, at least one of the enclosure, the port, and the adapter is provided with a photographing direction indication structure for indicating the photographing direction. The photographing direction indication structure includes at least one of a protruding structure, a recessed structure, a color identifier, and a pattern identifier. The photographing direction indication structure helps an engineering person to quickly learn the first photographing direction, avoiding obtaining invalid on-site image (for example, a first identification area on an optical fiber connector is completely blocked) through photographing and further improving construction efficiency and accuracy.

In some possible designs, at least one of the enclosure, the port, and the adapter is provided with an installation instruction structure. The installation instruction structure is used to indicate at least one of a position and an angle in which the optical fiber connector is mounted on the port. The installation instruction structure helps an engineering person to quickly, accurately, and firmly mount the optical fiber connector on the adapter. In addition, through identification of the on-site image, whether the installation instruction structure matches a connector indication structure may be further identified, and whether the optical fiber connector is correctly mounted on the adapter may be further identified.

In some possible designs, the optical network device further includes the optical fiber connector and the optical cable that is connected to the optical fiber connector.

In some possible designs, at least one of the adapter, the port, and an area of the enclosure that is near the adapter is provided with a second identification area, and the second identification area is used to identify the port or the adapter. The second identification area includes at least one of a barcode, a two-dimensional code, a color identifier, a pattern identifier, and a structure identifier. The on-site image obtained through photographing may further include an image of a second identification area corresponding to each port, and a port identifier corresponding to each port can be automatically obtained by identifying each second identification area in the on-site image.

In some possible designs, the enclosure is further provided with a device identification area, and the device identification area is used to indicate attribute information of the optical network device. The attribute information includes at least one of a name, an identification number, a serial number, a production date, a port arrangement manner, of the optical network device. The device identification number and the port arrangement manner can be directly obtained through identification of the device identification area in the on-site image, so that an engineering person does not need to manually input the device identification number. Based on the foregoing embodiments, a correspondence between a device identification number, a port identification number, and an identification number of an optical fiber connector can be automatically obtained eventually. This helps improve construction efficiency and implement automation.

### BRIEF DESCRIPTION OF DRAWINGS

FIG. 1 is a schematic structural diagram of an embodiment of an optical network device according to embodiments of this application;
FIG. 2 is a side elevation view of the optical network device in FIG. 1;
FIG. 3 is a front elevation view of the optical network device in FIG. 1; and
FIG. 4 is a schematic partial structural diagram of an embodiment of an optical network device according to embodiments of this application.

### DESCRIPTION OF EMBODIMENTS

In the specification, claims, and accompanying drawings of this application, the terms "first", "second", and so on are intended to distinguish between similar objects but do not necessarily indicate a specific order or sequence. It should be understood that data termed in such a way are interchangeable in proper circumstances so that the embodiments of the present invention described herein can be implemented in orders other than the order illustrated or described herein. In addition, the term "include", "comprise" or any of their deformations, are intended to cover non-exclusive inclusion, for example, a series of products or devices are not necessarily limited to the structures that are clearly listed, but may include the structures not clearly listed or other structures inherent to these products or devices. The examples of the structures shown in this application are merely logical examples for description. In practice, there may be other alternative structures during implementation, for example, a plurality of components may be combined or integrated into another structure, or some structure features may be omitted or may not be performed. In addition, the displayed or discussed mutual couplings or direct couplings may be used to implement the embodiments of this application by selecting some or all structures based on actual needs.

The embodiments of this application provide an optical network device. The optical network device is applied to an ONT in the field of optical communications, such as in the ODN or PON field. For example, the optical network device in this application may be, but not limited to, a fiber access terminal (fiber access terminal, FAT), a splitting and splicing closure, an optical access terminal box, an optical network terminal, an optical distribution frame, or the like. The optical distribution frame, for example, is configured for termination and distribution of a trunk optical cable at a local end of an optical fiber communications system, so that a connection, distribution and scheduling of fiber circuits can be conveniently realized. The fiber access terminal is located at a user access point in an optical access network, and implements a connection between a distribution optical cable and a drop cable, a direct connection, divergence and protection function of an optical fiber, and an optical splitter or the like can be disposed inside the fiber access terminal. The splitting and splicing closure may be an outdoor product that supports manhole/handhole installation, is mainly applied to the user access point in the optical access network, and implements a connection and divergence between optical cables, introduces a drop cable on a user side, and implements other functions. The optical access terminal box is a passive device used to connect the drop cable to an indoor ONT, and is installed on a user's internal wall to provide an optical fiber socket for the indoor ONT.

It can be understood that, the optical network device may be a device on any node of the ODN, but is not limited to those mentioned above, and specific names are not limited in this application.

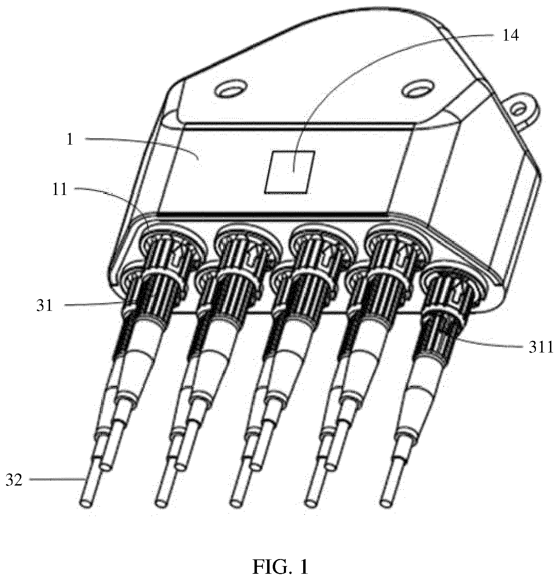

In an embodiment, referring to FIG. 1 to FIG. 3, the optical network device includes an enclosure 1, and the enclosure 1 is provided with at least one port 11; and the optical network device further includes at least one adapter 2 mounted on the port 11, the adapter 2 is configured to connect to an optical fiber connector 31, an optical cable 32 is connected to the optical fiber connector 31, and an outer sidewall of the optical fiber connector 31 or an outer sidewall of the optical cable 32 is provided with a first identification area 311, and the first identification area 311 is used to identify the optical fiber connector 31 or the optical cable 32. It can be understood that, the optical cable in this application file may be a comparatively thick optical cable (which includes a plurality of optical fibers inside, where there is plastic jacket on the outside of each optical fiber) sold in the market, or may be an optical cable inside which there is a relatively thin optical fiber with a plastic jacket.

The first identification area 311 includes, but is not limited to, at least one of a barcode, a two-dimensional code, a color identifier, a pattern identifier, and a structure identifier. The barcode, the two-dimensional code, the color identifier, the pattern identifier, or the like may be a printed label that is affixed on the outer sidewall of the optical fiber connector 31 or the outer sidewall of the optical cable 32, or may be directly made on the outside of the optical fiber connector 31 or the outside of the optical cable 32 by using other processes such as laser engraving or screen printing. The color identifier may be, for example, an identification area in which color bars with different colors are combined together (the color bars with the different colors are combined in different orders to indicate different identifiers). The pattern identifier may be, for example, a pattern or an identification number that is in a one-to-one correspondence to the identifier. The structure identifier may be a protruding structure, a recessed structure, or the like, and the protruding structure may be, for example, a protruding point, a protruding line, or a protruding block. The recessed structure may be a recessed point, a recess, a groove, or the like.

In an embodiment, the first identification area 311 indicates the identification number of the optical fiber connector 31 or the optical cable 32. One optical cable 32 is connected to one optical fiber connector 31, so when the first identification area 311 indicates the identification number of the optical fiber connector 31, the optical cable 32 may also be uniquely identified; when the first identification area 311 indicates the identification number of the optical cable 32, the optical fiber connector 31 may also be uniquely identified. In this case, indicating the optical fiber connector 31 and indicating the optical cable 32 are equivalent, and both represent the same optical fiber link.

An identification number of each optical fiber connector 31 or an identification number of each optical cable 32 may uniquely identify the optical fiber connector 31 or the optical cable 32 within a specific area range. The specific area range can be understood as, for example, all optical fiber connectors 31 or all optical cables 32 on an optical fiber link of one OLT or within a geographic area.

A handheld terminal may photograph the optical network device to obtain an on-site image. The on-site image includes an image of the first identification area 311. Through image identification on the on-site image, the first identification area 311 can be identified, so that an identification code corresponding to the optical fiber connector 31 or an identification code corresponding to the optical cable 32 can be further identified.

In an embodiment, the first identification area 311 is an annular area surrounding the outside of the optical cable 32. Therefore, it is more convenient to simultaneously take photographs of first identification areas 311 on all of the optical cables 32 or all of the optical fiber connectors 31 of the optical network device from at least one angle. It can be understood that, the annular area may be uninterrupted, and this helps take photographs of the first identification areas 311 on all of the optical cables 32 or all of the optical fiber connectors 31 of the optical network device simultaneously at the at least one angle; and the annular area may also be discontinuous, conducive in reducing costs in printing or making the first identification area 311.

All of the ports 11 are mutually arranged in a staggered manner, the adapters 2 mounted on all of the ports 11 are mutually arranged in a staggered manner, and the optical fiber connectors 31 mounted on all of the adapters 2 are mutually arranged in a staggered manner, so that at least a first photographing direction is present, and the first identification area 311 on the optical fiber connector 31 or the optical cable 32 can be photographed in the first photographing direction.

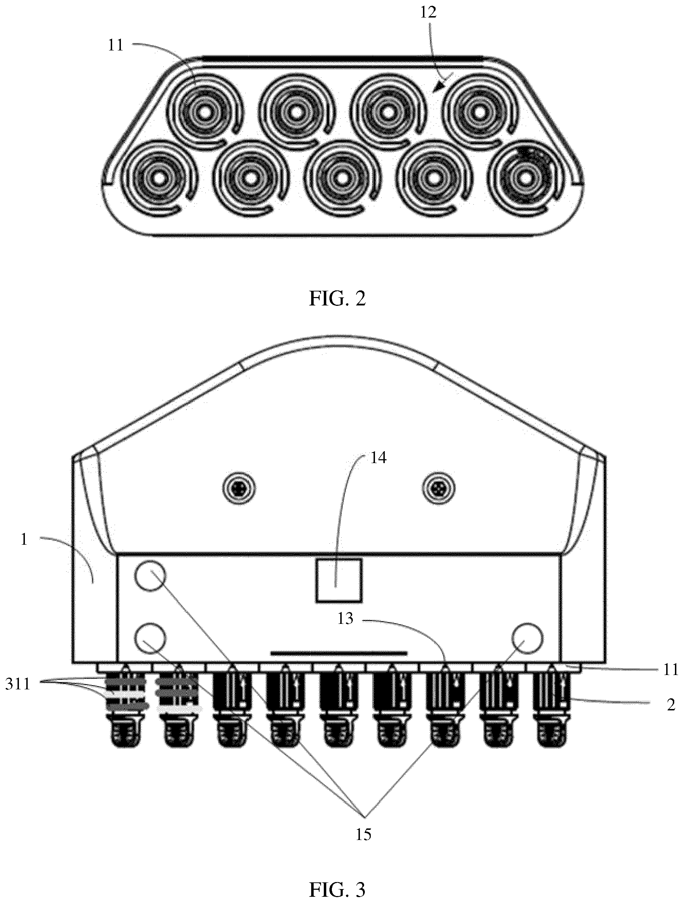

In this embodiment, there are many ways for mutual arrangement in a staggered manner. For example, the first identification area 311 is disposed on the optical fiber connector 31, and at least one photographing direction can be present. The photographing direction is a direction in which the outer sidewall of the optical fiber connector 31 can be photographed. Further, the photographing direction is a direction in which the first identification area 311 outside the optical fiber connector 31 can be photographed. It can be understood that the photographing direction is generally perpendicular or roughly perpendicular to a direction of an optical propagation channel inside the optical fiber connector 31. Therefore, a manner in which the ports 11 are arranged in at least one of the foregoing photographing directions can be referred to as mutual arrangement in a staggered manner. For example, all of the ports 11 may be arranged in, but not limited to, a single row, a W-shape, a V-shape, or an S-shape. In addition, as shown in FIG. 1 and FIG. 2, all of the ports 11 may alternatively be arranged in a double row.

It can be understood that the adapters 2 are mounted on the ports 11, the optical fiber connectors 31 are mounted on the adapters 2, and when all of the ports 11 are mutually arranged in a staggered manner, all of the adapters 2 may also be mutually arranged in a staggered manner, and all of the optical fiber connectors 31 may further be mutually arranged in a staggered manner. In addition, at least a first photographing direction is present, so that the first identification area 311 on the optical fiber connector 31 or the optical cable 32 disposed on the port 11 can be photographed at one time in this photographing direction. Therefore, the photographed on-site image includes the first identification area 311 corresponding to each mounted optical fiber connector 31, and image identification can be performed on the first identification area 311 to obtain an identification number corresponding to each optical fiber connector 31 or each optical cable 32. For example, through identification of the on-site image, a position of each port 11 may be obtained (such as a first position in a first row or a third position in a second row). Through identification of the on-site image, the optical fiber connector 31 inserted in the position of each port 11 can be obtained, and the identification number of the optical fiber connector 31 corresponding to the port 11 in each position can be further determined, that is, a correspondence between each port 11 identifier (for example, locations of ports 11 on an optical network device are different and can be considered as port 11 identifiers) and a corresponding optical fiber connector 31 identifier can be eventually obtained.

Alternatively, in another embodiment, at least one of the adapter 2, the port 11, and an area, near each adapter 2, of the enclosure 1 is provided with a second identification area (not shown in the figure) for identifying each port 11 or each adapter 2. The second identification area includes at least one of a barcode, a two-dimensional code, a color identifier, a pattern identifier, and a structure identifier. For details about the barcode, the two-dimensional code, the color identifier, the pattern identifier, and the structure identifier, refer to the foregoing embodiments, and details are not repeated here any further. Each second identification area may identify one port 11 identifier. The photographed on-site image may further include an image of a second identification area corresponding to each port 11. In this way a port 11 identifier corresponding to each port 11 can be obtained by identifying each second identification area in the on-site image.

It can be understood that, for the first identification area 311 on each optical fiber connector 31, the on-site image may not present the entire first identification area 311 on the optical fiber connector 31, but present only a part of the first identification area 311, provided that the identification number of the optical fiber connector 31 can be correctly identified based on the first identification area 311 in the on-site image.

In the prior art, the fiber access terminal FAT is used as an example. When each user subscribes to a data service (for example, a broadband service or a Wi-Fi service that needs to be subscribed to for home use), the user needs a drop cable 32. One end of the drop cable 32 is inserted into a port 11 of the optical cable 32 of the FAT, and the other end is connected to a device in the user's house. A plurality of optical cable 32 ports 11 are usually arranged on each FAT, and each FAT is connected to a plurality of optical cables 32. The ODN is a passive network, and each node device does not have a management or maintenance function, so a correspondence between each optical cable 32 port 11 and an optical cable 32 can be recorded only by an engineering person, resulting in a comparatively high error rate. In addition, operators need to invest manpower every year to reorganize ODN resources, and an engineering person needs to manually record a connection relationship between a port 11 on each device and an optical cable connected to the port 11, or the like on-site. Consequently, labor costs are comparatively high, and man-made problems such as a misoperation and omission are also inevitable.

The optical network device provided in this embodiment may help an engineering person to take a photograph to obtain an on-site image, so that a correspondence between each port 11 identifier and an identification number of a corresponding optical fiber connector 31 can be automatically obtained based on the live image. In this case, the on-site engineering person does not need to manually record a correspondence between each optical cable 32 port 11 and an optical cable 32 during construction, but only needs to directly take a photograph along the first photographing direction. In this way, labor costs are low, and construction efficiency and accuracy are high.

In an embodiment, at least one of the enclosure 1, the port 11, and the adapter 2 is provided with a photographing direction indication structure 12 for indicating the first photographing direction. The photographing direction indication structure 12 includes at least one of a protruding structure, a recessed structure, a color identifier, and a pattern identifier. The photographing direction indication structure 12 may be provided on the front, a side, or the like of the enclosure 1.

In an embodiment, as shown in FIG. 2, the photographing direction indication structure 12 may be provided on a sidewall of the port 11, to help indicate the photographing direction. The photographing direction indication structure 12 may be, for example, an arrow (as shown in FIG. 2) or a character. Specifically, the photographing direction indication structure 12 may be presented as the protruding structure, the recessed structure, the pattern identifier, or the like. The photographing direction indication structure 12 helps an engineering person to quickly learn the first photographing direction, avoiding obtaining invalid on-site image (for example, a first identification area 311 on an optical fiber connector 31 is completely blocked) through photographing and further improving construction efficiency and accuracy.

In an embodiment, at least one of the enclosure 1, the port 11, and the adapter 2 is provided with an installation instruction structure 13 for indicating at least one of a position or an angle at which the optical fiber connector 31 is mounted on the port 11. In an embodiment, a connector indication structure may also be provided on the optical fiber connector 31. When the connector indication structure cooperates with the installation instruction structure 13, for example, the connector indication structure is aligned with the installation instruction structure 13, the optical fiber connector 31 may be correctly mounted. Therefore, the installation instruction structure 13 helps an engineering person to quickly, accurately, and firmly mount the optical fiber connector 31 on the adapter 2. In addition, through identification of the on-site image, whether the installation instruction structure 13 matches the connector indication structure may be further identified, and whether the optical fiber connector 31 is correctly mounted on the adapter 2 may be further identified.

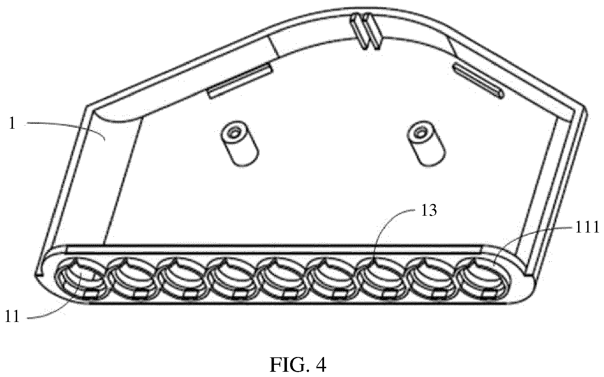

In an embodiment, as shown in FIG. 4, the port 11 includes a port sidewall 111 protruding from the outside of the enclosure 1. The installation instruction structure 13 is at least one of a groove disposed on the port sidewall 111 (as shown in FIG. 4, the groove may be a V-shaped groove, a rectangular groove, a C-shaped groove, or the like), a scale line, a protruding structure, a recessed structure, a color identifier, and a pattern identifier; and a protruding structure, an arrow identifier, a recessed structure, a color identifier, a pattern identifier, or the like corresponding to the installation instruction structure 13 may also be provided on the outer sidewall of the optical fiber connector 31. When the installation instruction structure 13 is aligned with the connector indication structure outside the optical fiber connector 31, it indicates that the optical fiber connector 31 is correctly mounted.

Alternatively, the installation instruction structure 13 is at least one of a protruding structure, a recessed structure, a color identifier, or a pattern identifier provided outside the adapter 2. For the protruding structure, the recessed structure, the color identifier, and the pattern identifier, refer to the foregoing embodiments, and details are not repeated here any further.

In an embodiment, the optical network device further includes the optical fiber connector 31 and the optical cable 32 connected to the optical fiber connector 31.

In an embodiment, as shown in FIG. 1 and FIG. 3, the enclosure 1 is further provided with a device identification area 14, and the device identification area 14 is used to indicate attribute information of the optical network device. The attribute information may include but is not limited to at least one of a name, an identification number, a serial number, a production date, a port 11 arrangement manner of the optical network device. The device identification area 14 may be disposed on the front side of the enclosure 1 along the first photographing direction, to help take a photograph of the device identification area 14 from the front side during photographing along the first photographing direction. Through identification of the device identification area 14 of the on-site image, the device identification number and the port 11 arrangement manner can be directly obtained, so that an engineering person does not need to manually input the device identification number. Based on the foregoing embodiments, to eventually obtain a correspondence between a device identification number, a port 11 identification number, and an identification number of an optical fiber connector 31 can be automatically obtained eventually. This helps improve construction efficiency and implement automation.

In an embodiment, as shown in FIG. 3, the enclosure 1 may be further provided with image identification auxiliary structures 15 for assisting in identification of an on-site image, for example, identification in a correct direction. The image identification auxiliary structure 15 may be, for example, at least one of a barcode, a two-dimensional code, a color identifier, a pattern identifier, and a structure identifier. For details, refer to the foregoing embodiments, and details are not repeated here any further. In an example, as shown in FIG. 3, the image identification auxiliary structures 15 may be 3 bumps arranged in an L-shape. Further, image identification is performed by using the L-shape is identified by using a side with the L-shape as a front side.

For example, the image identification auxiliary structure 15 may be provided on the front side of the enclosure 1 along the first photographing direction, to help photograph the image identification auxiliary structure 15 from the front side during photographing along the first photographing direction.

In the foregoing embodiments, the descriptions of the embodiments has respective focuses. For a part that is not described in detail in an embodiment, refer to the related descriptions in other embodiments.

It can be clearly understood by a person skilled in the art that, for the purpose of convenient and brief description, a detailed working process of the foregoing system, apparatus, and module, refer to a corresponding process in the foregoing method embodiments, and details are not described here any further.

The technical solutions provided in this application are described in detail above. The principle and implementation of this application are described herein by using specific examples. The description about the foregoing embodiments is merely intended to help understand the methods and core ideas of this application. In addition, a person of ordinary skill in the art may make variations and modifications to this application in terms of the specific implementations and application scopes according to the ideas of this application. Therefore, the content of specification shall not be construed as a limit to this application.

## Claims

1. An optical network device, wherein the optical network device comprises an enclosure, and the enclosure comprises multiple adapters, each adapter is configured to connect to an optical fiber connector;
all of the adapters are mutually arranged in a staggered manner, so that the optical fiber connectors connected to the adapters are mutually arranged in a staggered manner;
wherein the enclosure is provided with a device identification area, and the device identification area is used to indicate attribute information of the optical network device.

2. The optical network device according to claim 1, wherein the enclosure is provided with multiple ports, and each of the adapter is mounted on a port of the enclosure.

3. The optical network device according to claim 1, wherein at least one of the enclosure, the port, and the adapter is provided with a photographing direction indication structure for indicating the photographing direction.

4. The optical network device according to claim 3, wherein the photographing direction indication structure comprises at least one of a protruding structure, a recessed structure, a color identifier, and a pattern identifier.

5. The optical network device according to any one of claims 1 to 4, wherein at least one of the enclosure, the port, and the adapter is provided with an installation instruction structure, and the installation instruction structure is used to indicate at least one of a position and an angle in which the optical fiber connector is mounted on the port.

6. The optical network device according to claim 5, wherein the port comprises a port sidewall protruding from the enclosure, and the installation instruction structure is at least one of a groove, a protruding structure, a recessed structure, a color identifier, and a pattern identifier that are provided on the port sidewall; or the installation instruction structure is at least one of a protruding structure, a recessed structure, a color identifier, and a pattern identifier that are provided outside the adapter.

7. The optical network device according to any one of claims 1 to 4, wherein the optical network device further comprises the optical fiber connector and the optical cable connected to the optical fiber connector.

8. The optical network device according to any one of claims 1 to 4, wherein at least one of the adapter, the port, and an area of the enclosure that is near the adapter is provided with a second identification area, and the second identification area is used to identify the port or the adapter.

9. The optical network device according to claim 8, wherein the second identification area comprises at least one of a barcode, a two-dimensional code, a color identifier, a pattern identifier, and a structure identifier.

10. The optical network device according to claim 1, wherein the attribute information comprises at least one of a name, an identification number, a serial number, a production date, a port arrangement manner of the optical network device.

11. The optical network device according to any one of claims 1 to 10, wherein all of the ports are mutually arranged in a single row, a double row, a W-shape, a V-shape, or an S-shape.

12. The optical network device according to any one of claims 1 to 11, wherein the first identification area is an annular area surrounding outside of the optical cable; and
the first identification area indicates an identification number of the optical cable, and each identification number uniquely identifies the optical fiber connector or the optical cable.

13. The optical network device according to any one of claims 1 to 12, wherein the first identification area comprises at least one of a barcode, a two-dimensional code, a color identifier, a pattern identifier, and a structure identifier.

14. The optical network device according to any one of claims 1 to 13, wherein the optical network device is at least one of a fiber access terminal FAT, a splitting and splicing closure SSC, an access terminal box ATB, an optical network terminal ONT, and an optical distribution frame ODF.

15. The optical network device according to any one of claims 1 to 14, wherein the enclosure is further provided with an image identification auxiliary structure, and the image identification auxiliary structure is configured to assist image identification of the optical network device.
